Europäisches Patentamt

European Patent Office

Office européen des brevets

(19)

(11) Veröffentlichungsnummer: **0 033 445**
**B1**

(12) ## EUROPÄISCHE PATENTSCHRIFT

(45) Veröffentlichungstag der Patentschrift:
**19.11.87**

(51) Int. Cl.⁴: **G 06 F 13/40,** H 04 B 9/00

(21) Anmeldenummer: **81100236.9**

(22) Anmeldetag: **14.01.81**

(54) **Passives Bussystem für dezentral strukturierte Mehrrechneranordnungen, insbesondere Multimikrocomputer-Anordnungen.**

(30) Priorität: **17.01.80 DE 3001638**

(43) Veröffentlichungstag der Anmeldung:
**12.08.81 Patentblatt 81/32**

(45) Bekanntmachung des Hinweises auf die Patenterteilung:
**19.11.87 Patentblatt 87/47**

(84) Benannte Vertragsstaaten:
**FR GB IT NL**

(56) Entgegenhaltungen:
DE - A - 2 721 728
US - A - 3 755 789

IEEE TRANSACTIONS ON COMMUNICATIONS, Band COM-26, Nr. 7, Juli 1978, Seiten 983-990 New York, U.S.A. E.G. RAWSON et al.: "Fibernet: Multimode optical fibers for local computer networks"
3RD USA-JAPAN COMPUTER CONFERENCE PROCEEDINGS, 10th-12th October 1978, San Francisco, California Seiten 4-4-1/4-4-8 Baltimore, U.S.A. G.S. CHRISTENSEN et al.: "Design and analysis of teh access protocol for hyperchannel networks"
ELEKTRONIK, Heft 19, 1979, Seiten 87-90, München, DE. E. HORBST et al.: "Ein Multi-Mikrocomputersystem am Arbeitsplatz"
EDN ELECTRICAL DESIGN NEWS, Band 23, nr. 7, 5. April

(73) Patentinhaber: **Siemens Aktiengesellschaft Berlin und München, Wittelsbacherplatz 2, D-8000 München 2 (DE)**

(72) Erfinder: **Sauer, Anton, Dipl.-Ing., Tristanstrasse 14, D-8034 Germering (DE)**
Erfinder: **Witte, Hans-Hermann, Dr., Hippelstrasse 15, D-8000 München 82 (DE)**

(56) Entgegenhaltungen: (Fortsetzung)
1978, Seiten 35-37 Denver, U.S.A. F. HORBST et al.: "Fiber-optic links in multi-muC systems"
IEEE JOURNAL OF SOLID-STATE CIRCUITS, Band SC-9, Nr. 5, Oktober 1974, Seiten 297-306 New York, U.S.A. B.A. WOOLEY et al.: "An integrated m-out-of-n detection circuit using threshold logic"
IBM TECHNICAL DISCLOSURE BULLETIN, Band 12, Nr. 12, Mai 1970, Seiten 2071-2072 New York, U.S.A. R.A. HENLE et al.: "Error-correcting address technique"
SIEMENS FORSCH. & ENTWICKL. BERICHTE, Band 9, Nr. 1, 1980, Seiten 32-37 Berlin, DE. A. SAUER et al.: "Einsatz eines Lichtwellenleiter-Bussystems in einer verteilten Multimikrocomputerstruktur"

## Beschreibung

Die Erfindung betrifft ein passives Bussystem für dezentral strukturierte Mehrrechner-Anordnungen, insbesondere Multimikrocomputer-Anordnungen.

Mehrrechner-Anordnungen auf der Basis heutiger Mikrocomputer (z.B. INTEL 8086) benötigen Bus-Übertragungsgeschwindigkeiten von höchstens 32 Mbit/s. Wenn die Bits zu übertragender Datenwörter zeitlich parallel übertragen werden (n Bits gleichzeitig), ist der Aufwand an Sendern, Empfängern, Leitungen und Entzerrern gegenüber einer zeitlich seriellen Übertragung n-mal so hoch.

Andererseits erhöht sich bei serieller Übertragung die Bandbreite um den Faktor n. Der zusätzliche Aufwand, den die bitweise Übertragung verursachen würde, würde jedoch in keinem Verhältnis zu einem ansonsten wirtschaftlich und aufbaumässig günstigen Mehrrechnersystem stehen. Abgesehen davon würde durch die zusätzlichen technischen Einrichtungen die Zuverlässigkeit eines solchen Systems sinken.

Wegen der ständig erhöhten Anforderungen an Multimikrocomputer-Anordnungen in Bezug auf die Anzahl der in einer solchen Anordnung vorgesehenen Mikrocomputer und in Bezug auf die Steigerung der Verarbeitungsgeschwindigkeit des Gesamtsystems würde eine aus den oben angegebenen Gründen wünschenswerte bitweise Übertragung mit bekannten Mitteln keine realisierbaren Lösungen mehr gestatten.

Ein Einsatz optischer Komponenten anstelle elektrischer Komponenten in dem Bussystem einer dezentral strukturierten Mehrrechner-Anordnung würde die Umgehung der genannten technischen Beschränkungen erlauben.

In letzter Zeit sind die wesentlichen Komponenten eines optischen Nachrichtensystems, nämlich Sender-Modulatoren, Empfänger und Übertragungsmedium hinsichtlich Qualität und Lebensdauer soweit verbessert worden, dass die optische Informationsübertragung gegenüber der elektrischen eine diskutable Alternative zu rein elektrischen Nachrichtensystemen darstellt, vgl. Erdel, K.: Strehl, H.: Glasfaser-Bussysteme zur Signalübertragung in Bordnetzen, Frequenz 31 (1977), S. 364–368.

Anwendungen optischer Systeme finden sich bei der Nachrichtenübertragung und in der Datenverarbeitung. Die Vorteile optischer Systeme sind hohe Übertragungskapazität, kleines Gewicht und Volumen sowie Nebensprechfreiheit. Darüber hinaus ist der Vorteil der Unempfindlichkeit gegenüber Fremdfeldern elektrischer und/oder magnetischer Natur gegeben.

Diese Merkmale haben je nach Einsatz unterschiedliche Bedeutung. Da in jüngster Zeit die Eigenschaften passiver optischer Bausteine, wie Stecker, Abzweiger, vgl. Witte, H.-H.: Kulich, V.: Planar Input-Output Couplers in Thick-Film Technology for Multimode Optical Fibers, Siemens Forschungs- und Entwicklungsberichte 8 (1979) S. 141–143 und Reichelt, A.: Winzer, G. et al: Improved Optical Tapping Elements for Graded-Index Optical Fibers, Siemens Forschungs- und Entwicklungsberichte 8 (1979) S. 130–135, und Mischer, vgl. Stockmann, M.: Witte, H.-H.: Planar Star Coupler for Multimode Fibers, Manuskript eingesendet an OPT. Commun., wesentlich verbessert worden sind, denkt man auch daran, die optischen Verbindungswege zwischen den Endgeräten zunehmend durch optische Bus-Netzstrukturen herzustellen und nicht durch eine Punkt-zu-Punkt-Verbindung, vgl. Witte, H.-H.: Bussystems with Optical Waveguides, Siemes Forschungs- und Entwicklungsberichte 7 (1978) S. 325 bis 327.

Aus verschiedenen Druckschriften sind bereits sog. unidirektionale und bidirektionale optische Mischer bekannt, vergl. beispielsweise IEEE Transactions on Communications, Bd. COM-26, Nr. 7, Juli 1978, S. 983 bis 990 und DE-A-2 721 728, die es erlauben, optische Bussysteme zu schaffen, durch die die aus mehreren technischen und wirtschaftlichen Gründen ungünstigen Punkt-zu-Punkt-Verbindungen der Einrichtungen eines Systems entfallen können.

Der vorliegenden Erfindung liegt die Aufgabe zugrunde, ein passives Bussystem für dezentral strukturierte Mehrrechner-Anordnungen, insbesondere Multimikrocomputer-Anordnungen, zu schaffen, mittels dessen mehrere jeweils aus mehreren Funktionseinheiten und einem optischen unidirektionalen Mischer bestehende Systeme sowie mehrere einzeln angeordnete weitere Funktionseinheiten zum Zwecke einer Datenkommunikation verbindbar sind.

Die genannte Aufgabe für die Erfindung wird durch ein passives Bussystem für dezentral strukturierte Mehrrechner-Anordnungen, insbesondere Multimikrocomputer-Anordnungen, gemäss dem Oberbegriff des Patentanspruchs 1 gelöst. Dieses erfindungsgemässe passive Bussystem ist durch die im kennzeichnenden Teil des Patentanspruchs 1 angegebenen Merkmale charakterisiert.

Die Erfindung bietet den Vorteil, dass eine wirtschaftliche, betriebssichere dezentral strukturierte Mehrrechner-Anordnung realisiert werden kann, bei der eine hohe Übertragungsgeschwindigkeit, geringes Volumen, geringes Gewicht und eine praktisch absolute Unempfindlichkeit gegenüber Störfeldern elektrischer und/oder magnetischer Art gegeben ist. Die Erfindung bietet darüber hinaus den Vorteil, dass die Steuerung der Einzelkomponenten des Datenverarbeitungssystems dezentral, nämlich durch die Komponenten selbst vorgenommen wird, womit das System überdies betriebssicherer als ein mit einem bekannten elektrischen Bussystem ausgerüstetes System ist. Ein weiterer Vorteil ist darin zu sehen, dass ein solches System beliebig erweiterbar ist, da die dafür zu stellende Forderung nach Modularität erfüllt ist.

Weiterbildungen der Erfindung sind durch die in mehreren abhängigen Patentansprüchen angegebenen Merkmale gekennzeichnet.

Im folgenden soll die Erfindung anhand mehrerer, Ausführungsbeispiele für die Erfindung betreffender Figuren im einzelnen erläutert werden.

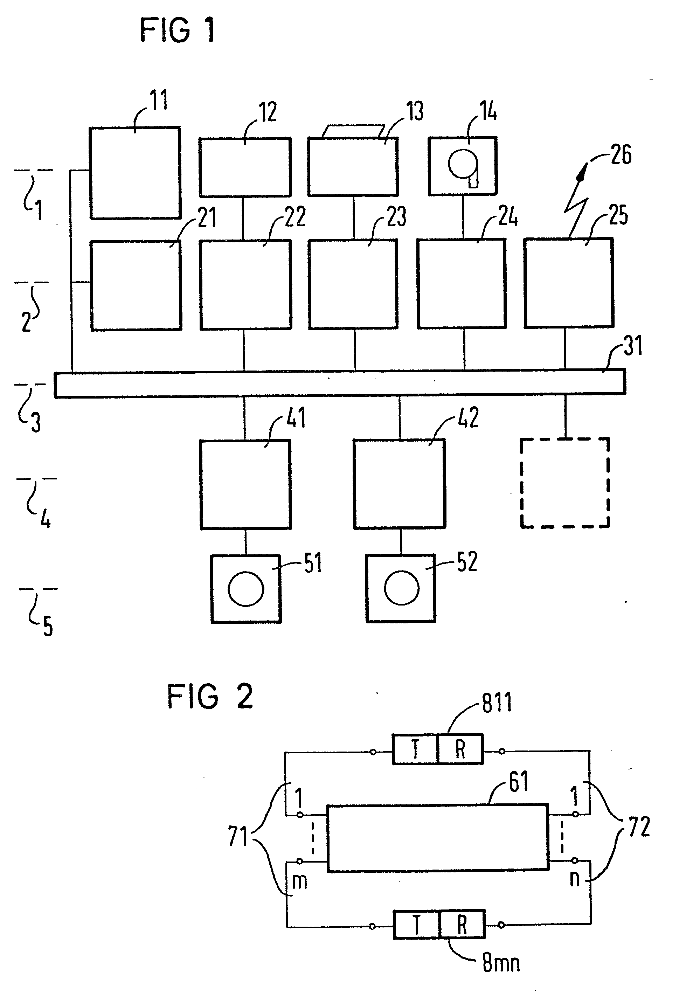

Figur 1 zeigt das Blockschaltbild einer Mehrrechnerstruktur mit einer Peripherieebene 1, in der eine erste Verarbeitungsfunktionseinheit 11, eine Anzeige-Einrichtung 12, ein Drucker 13 und eine Datei 14 vorgesehen sind, mit einer Funktionsebene 2, in der eine zweite Verarbeitungs-Funktionseinheit 21, eine Diagnose-/Test-Funktionseinheit 22, eine Eingabe-/Ausgabefunktionseinheit 23, eine Datei-Funktionseinheit 24 und eine externe Kommunikations-Funktionseinheit 25, an die eine Datenfernübertragung 26 angeschlossen ist, vorgesehen sind, mit einer Kommunikationsebene 3, die die interne Kommunikationsfunktion 31 erfüllt, mit einer Dialogebene 4, in der zumindest eine erste Dialog-Funktionseinheit 41 und eine zweite Dialog-Funktionseinheit 42 vorgesehen sind und mit einer Benutzerebene 5, in der zumindest ein erstes Benutzerendgerät 51 und ein zweites Benutzerendgerät 52 vorgesehen sind.

Figur 2 zeigt einen sog. Sternkoppler mit einem unidirektionalen Mischer 61, Sendeleitungen 71, Empfangsleitungen 72, einem ersten Sender-Empfänger 811 mit einem Sendeteil T und einem Empfangsteil R und einem n-ten Sender-Empfänger 8 mn mit ebenfalls einem Sendeteil T und einem Empfangsteil R.

Figur 3 zeigt einen Koppler mit einem bidirektionalen Mischer 62, bei dem die Sendeleitungen 71 und die Empfangsleitungen 72 einseitig angeschlossen sind und bei der an der anderen Seite des bidirektionalen Mischers ein Spiegel 621 angeordnet ist.

Figur 4 zeigt einen bidirektionalen Mischer 62, an dem eine bidirektionale Sende-Empfangsleitung 90 angeschlossen ist, die mit der einen Seite eines Abzweigs 9 verbunden ist, an dessen andere Seite eine Sendeleitung 71 und eine Empfangsleitung 72 angeschlossen sind.

Figur 5 zeigt die bidirektionale Sende-Empfangsleitung 90, die unmittelbar an einen Einelement-Sender-Empfänger 80 angeschlossen ist.

Figur 6 zeigt den prinzipiellen Aufbau eines Sendeteils T und den prinzipiellen Aufbau eines Empfangsteils R mit den jeweiligen Wandlern 81 und jeweils damit in Reihe geschalteten Verstärkern 82.

Figur 7 zeigt einen unidirektionalen Mischer 61 und über Funktionsrechner-Sendeleitungen 711, 712 sowie Funktionsrechner-Empfangsleitungen 721, 722 mit ihren Sendeteilen T bzw. Empfangsteilen R angeschlossene Funktionseinheiten, nämlich einem Funktionsrechner 15 und einem Dialogrechner 16.

Figur 8 zeigt einen bidirektionalen Mischer 62, an dessen optischen Ein-/Ausgang eine Sende-Empfangsleitung 90 angeschlossen ist, die ihrerseits zu einem Abzweig 9 führt, dessen zweite Anschlussseite über eine Sendeleitung 71 bzw. eine Empfangsleitung 72 mit dem Sendeteil T bzw. dem Empfangsteil R eines Endgerätes 17 verbunden ist.

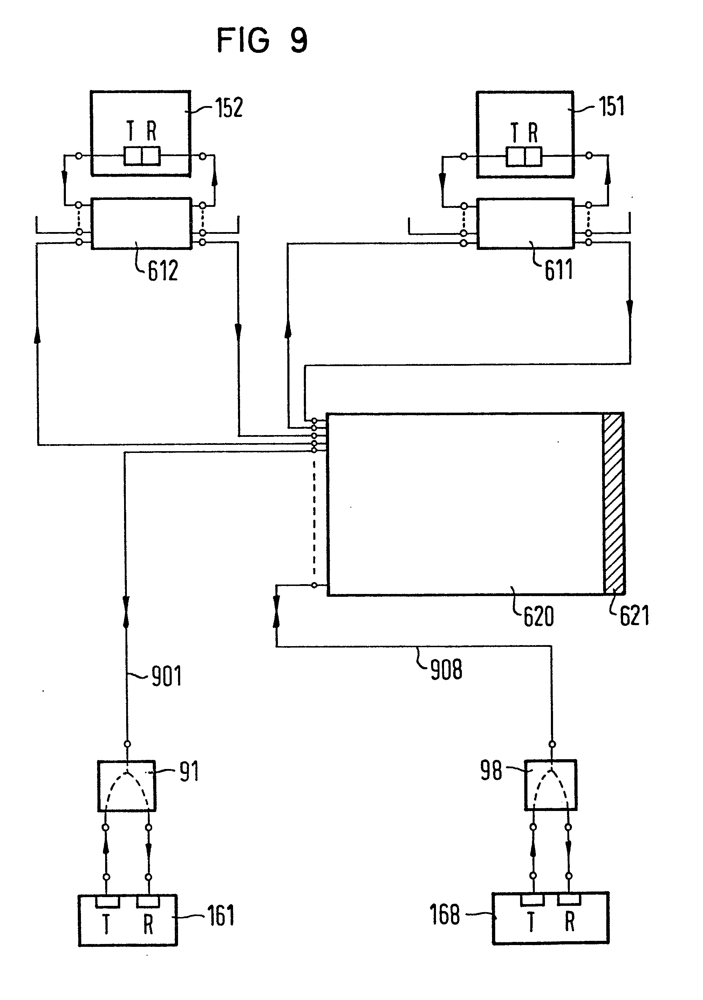

Figur 9 zeigt das Blockschaltbild eines Ausführungsbeispiels für die vorliegende Erfindung mit einem bidirektionalen Zentralmischer 620, an den ein erster unidirektionaler Nebenmischer 611 und ein zweiter unidirektionaler Nebenmischer 612 über unidirektionale Sende- bzw. Empfangsleitungen und bis zu 8 Abzweige 91...98 über jeweils eine individuell zugeordnete Sende-Empfangsleitung 901...908 angeschlossen sind. An den ersten Nebenmischer 611 ist u.a. ein erster Funktionsrechner 151 mit seinem Sendeteil T und seinem Empfangsteil R und an den zweiten Nebenmischer 612 u.a. ein zweiter Funktionsrechner 152 mit seinem Sendeteil T und seinem Empfangsteil R angeschlossen. An die Abzweige 91...98 sind Dialogrechner 161...168 mit ihren Sendeteilen T und Empfangsteilen R angeschlossen.

Figur 10 zeigt ein Blockschaltbild, bei dem im Gegensatz zu dem gemäss Figur 9 strukturierten Ausführungsbeispiel die Nebenmischer entfallen.

Figur 11 zeigt das Blockschaltbild eines Rechners 110 mit einer zentralen Verarbeitungseinheit CPU 111, einem Speicher 112, einer Peripherie-Eingabe-/Ausgabeeinrichting 113, einem daran angeschlossenen peripheren Gerät 114, einem internen Rechnerbus 115 und einer optischen Eingabe-/Ausgabeeinrichtung 116.

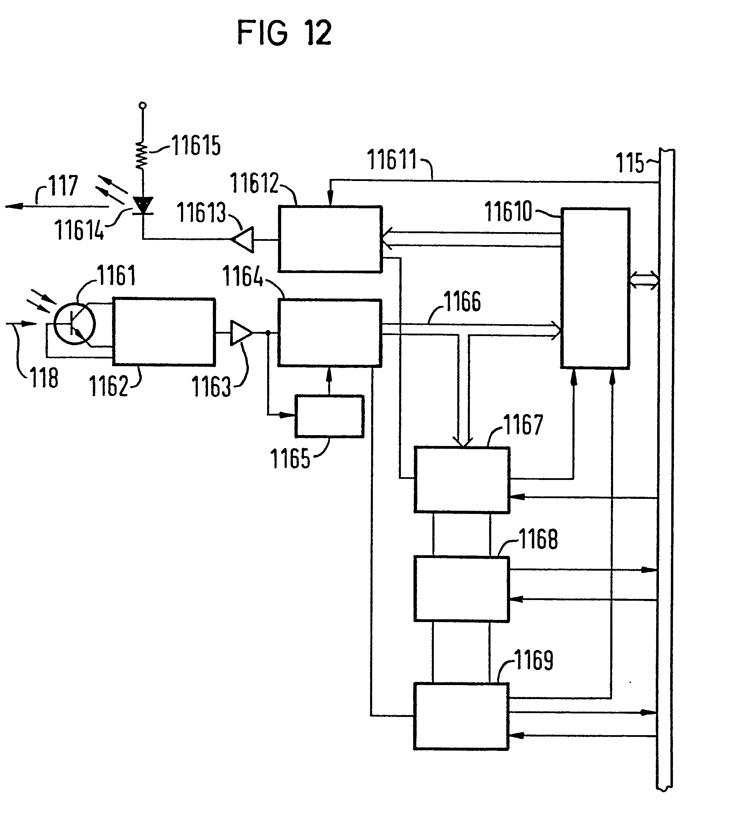

Figur 12 zeigt das Blockschaltbild einer Eingabe-/Ausgabe-Baugruppe zur Anschaltung an das mit optischen Übertragungsmitteln aufgebaute passive Bussystem mit einer Eingabeleitung 118, einem Fototransistor 1161, einer Anpassungsschaltung 1162, einem Eingabeverstärker 1163, einem Serien/Parallel-Umsetzer 1164, einer Taktversorgung 1165, einem Paralleldatenbus 1166, einer Adressdecodierungs-/Überwachungslogik 1167, einer Interruptsteuerung 1168, einer Direktspeicherzugriffs-Steuerung DMA 1169, einer Busdurchschaltung 11610, einer Taktleitung 11611, einem Parallel/Serien-Umsetzer 11612, einem Ausgabeverstärker 11613, einer lichtemittierenden Diode 11614, einem Vorwiderstand 11615 und einer Ausgabeleitung 117.

Wie bereits erläutert, zeigt Figur 1 den Aufbau der Mehrrechnerstruktur, wobei die einzelnen Funktionen Mikrocomputer darstellen. Die interne Kommunikationsfunktion ist herkömmlicher Weise in einem elektrischen Bussystem realisiert, das in direktem Speicherzugriffsverfahren (DMA) arbeitet und über einen eigenen Rechner gesteuert wird. Der Einsatz des optischen Sternkopplers bedeutet, dass innerhalb des Bussystems ausschliesslich «mit Licht» gearbeitet wird und keine Umsetzung auf elektrischer Ebene erfolgt. Gegenüber dem bekannten elektrischen Verfahren bedeutet dies, dass – nachdem der Busrechner entfällt – die Kommunikation dezentral vorgenommen wird und in jedem Rechner des Systems erfolgen muss.

Wie ferner bereits erläutert, zeigt Figur 2 einen sog. Sternkoppler mit einem unidirektionalen Mischer 61, Sendeleitungen 71, Empfangsleitungen 72, einem ersten Sender-Empfänger 811, einem Sendeteil T und einem Empfangsteil R und einem n-ten Sender-Empfänger 8 mn mit ebenfalls einem Sendeteil T und einem Empfangsteil R. Die Bezeichnung unidirektional sagt aus, dass der betreffende Sternkoppler, obwohl er Licht in beiden Längsrichtungen transportieren könnte, so betrieben wird, dass an seiner einen Seite Licht ausschliesslich eingekoppelt und an seiner anderen Seite Licht ausschliesslich ausgekoppelt wird.

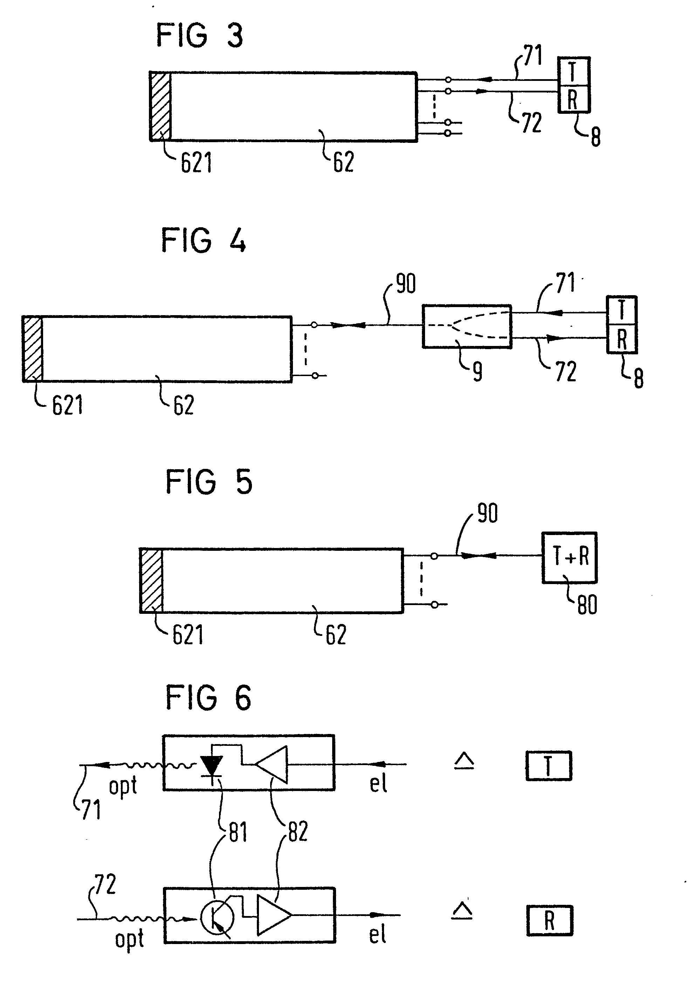

Es kann jedoch auch ein gemäss Figur 3 ausgeführter Koppler mit einem bidirektionalen Mischer 62, bei dem die Sendeleitungen 71 und die Empfangsleitungen 72 einseitig angeschlossen sind und bei der an der anderen Seite des bidirektionalen Mischers ein Spiegel 621 angeordnet ist, verwendet werden.

Figur 4 zeigt, wie bereits ebenfalls erläutert, ein Bussystem, bei dem an einen bidirektionalen Mischer 62 eine bidirektionale Sende-Empfangs-Leitung 90 angeschlossen ist, die mit der einen Seite eines Abzweigs 9 verbunden ist, an dessen andere Seite eine Sendeleitung 71 und eine Empfangsleitung 72 angeschlossen sind. Die Verwendung eines solchen Abzweigs 9 im Zusammenhang mit einem bidirektionalen Mischer, vgl. Figur 4, gestattet eine bessere Ausnutzung der insgesamt vorhandenen Anschlussmöglichkeiten von Lichtleitern an einen solchen bidirektionalen Mischer.

In den bisher erwähnten Figuren 2 bis 4 ist jeweils von Anordnungen ausgegangen worden, bei denen die Sendeteile T und die Empfangsteile R von Funktionseinheiten optisch voneinander getrennt sind und demzufolge über jeweils individuell zugeordnete Lichtleitungen angeschlossen sind. Gemäss einer Weiterbildung der Erfindung, die in Figur 5 dargestellt ist, ist es jedoch möglich, die Funktionseinheiten mit einem sog. Einelement-Sender-Empfänger 80, in den ein optischer Abzweig integriert ist, so dass der Einelement-Sender-Empfänger 80 jeweils über eine einzige Sende-Empfangsleitung 90, die somit bidirektional zu betreiben ist, anschliessbar ist.

Figur 6 zeigt, wie ebenfalls bereits erwähnt, ein Beispiel für den prinzipiellen Aufbau eines Sendeteils T und den prinzipiellen Aufbau eines Empfangsteils R mit den jeweiligen Wandlern 81 und jeweils damit in Reihe geschalteten Verstärkern 82. In dem Empfangsteil T werden über eine Zuführungsleitung el Stromimpulse, die der zu übertragenden Nachricht entsprechen, dem Verstärker 82 zugeführt, an dessen Ausgang vorzugsweise ein als lichtemittierende Diode LED ausgeführter Wandler 81 angeschlossen ist. Mit diesem Wandler 81 ist eine Lichtleitung opt, die beispielsweise in eine Sendeleitung 71 übergeht, optisch angeschlossen. Der Empfangsteil R, der beispielsweise an eine Empfangsleitung 72 über eine Lichtleitung opt mit seinem Wandler 81 angeschlossen ist, hat vorzugsweise als Wandler 81 einen Fototransistor. Diesem Fototransistor ist der Verstärker 82 nachgeschaltet, dessen Ausgang mit einer elektrischen Leitung el verbunden ist, um empfangene Nachrichten in Form von elektrischen Impulsen weiterzuleiten.

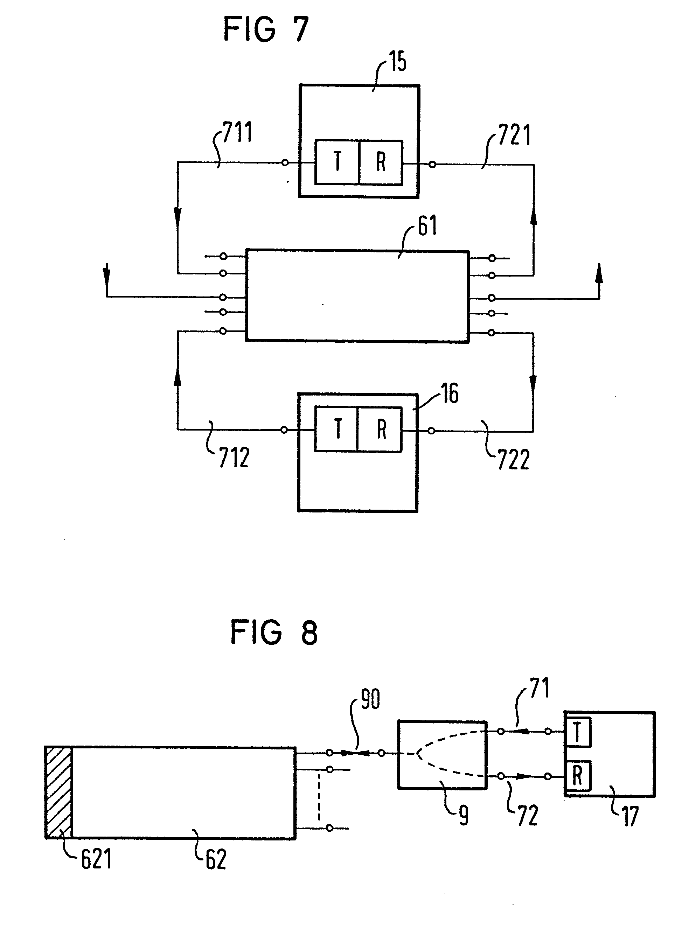

Figur 7 zeigt, wie ebenfalls bereits erläutert, ein Blockschaltbild mit einem unidirektionalen Mischer 61 und über Funktionsrechner-Sendeleitungen 711, 712 sowie Funktionsrechner-Empfangsleitungen 721, 722 mit ihren Sendeteilen T bzw. Empfangsteilen R angeschlossenen Funktionseinheiten, nämlich einem Funktionsrechner 15 und einem Dialogrechner 16.

Figur 8 zeigt das Blockschaltbild eines bidirektionalen Mischers 62, an dessen optischen Ein-/Ausgang eine Sende-Empfangsleitung 90 angeschlossen ist, die ihrerseits zu einem Abzweig 9 führt, dessen zweite Anschlussseite über eine Sendeleitung 71 bzw. eine Empfangsleitung 72 mit dem Sendeteil T bzw. dem Empfangsteil R eines Endgerätes 17 verbunden ist. Sowohl der grundsätzliche Aufbau gemäss Figur 7 als auch der grundsätzliche Aufbau gemäss Figur 8 kann allein oder in gemischter Bauweise für den Aufbau eines Gesamtsystems gemäss der vorliegenden Erfindung verwendet werden.

Figur 9 zeigt ein entsprechendes Blockschaltbild eines Ausführungsbeispiels für die vorliegende Erfindung, bei der ein mehrstufiges Bussystem, nämlich ein solches mit einer zentralen Ebene und mit mehreren peripheren Ebenen dargestellt ist. Es ist ein bidirektionaler Zentralmischer 620 vorgesehen, an den ein erster unidirektionaler Nebenmischer 611 und ein zweiter unidirektionaler Nebenmischer 612 über unidirektionale Sende- bzw. Empfangsleitungen und bis zu acht Abzweige 91...98 über jeweils eine individuell zugeordnete Sende-Empfangsleitung 901...908 angeschlossen sind. An den ersten Nebenmischer 611 ist u.a. ein erster Funktionsrechner 151 mit seinem Sendeteil T und seinem Empfangsteil R und an den zweiten Nebenmischer 612 u.a. ein zweiter Funktionsrechner 152 mit seinem Sendeteil T und seinem Empfangsteil R angeschlossen. An die Abzweige 91...98 sind Dialogrechner 161...168 mit ihren Sendeteilen T und Empfangsteilen R angeschlossen.

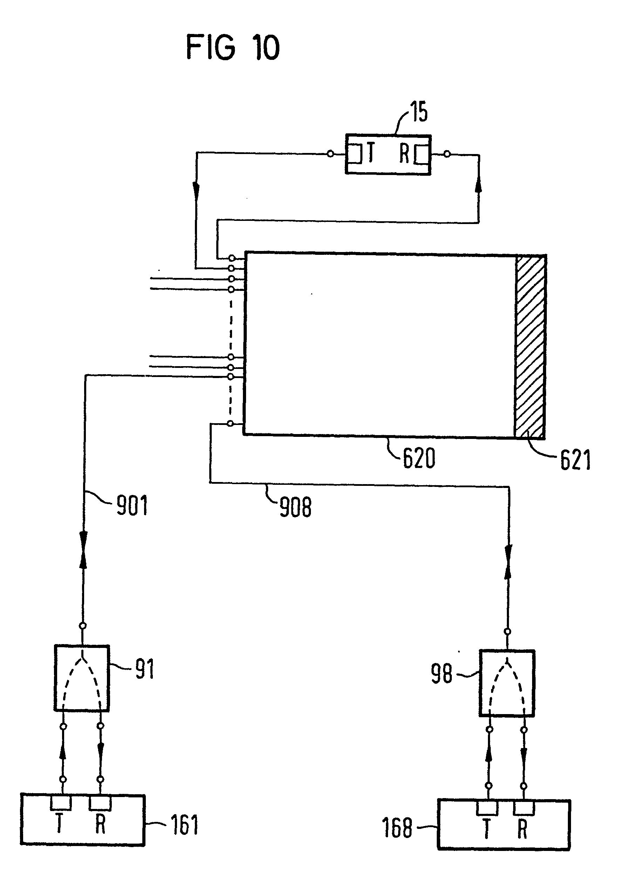

Die Anordnung gemäss Figur 10 vor, die es gestattet, die Nebenmischer einzusparen.

Die Art und Weise, wie ein erfindungsgemässes Bussystem strukturiert ist, hängt von der jeweiligen Aufgabenstellung für das zu realisierende Mehrrechnersystem ab. Vorteilhafterweise stellt das erfindungsgemässe Bussystem eine Vielzahl verschiedenartiger Kombinationen von unidirektionalen Mischern, bidirektionalen Mischern, unidirektional zu betreibenden Leitungen, bidirektional zu betreibenden Leitungen, Abzweigen, diskreten Sendeteilen T und diskreten Empfangsteilen R sowie Einelement-Sender-Empfängern zur Verfügung.

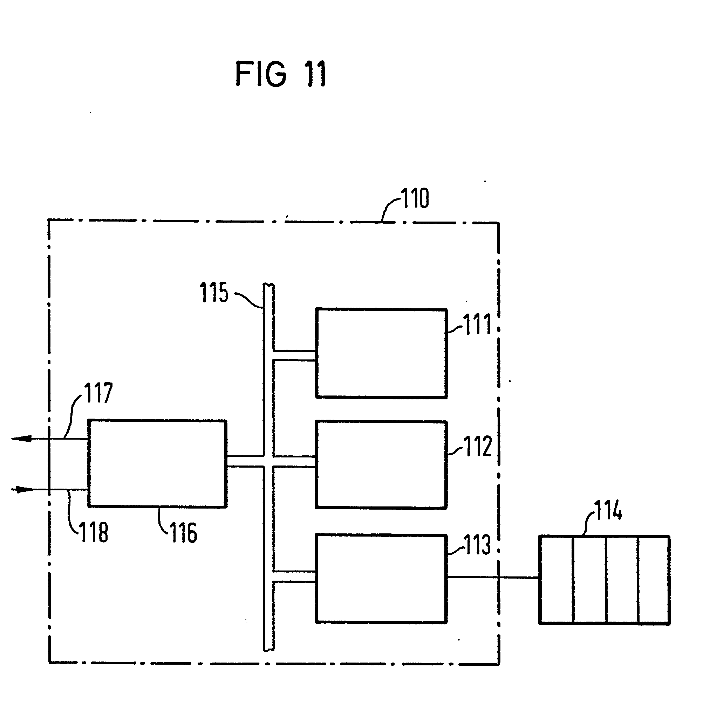

Ein Blockschaltbild eines Ausführungsbeispiels für einen Rechner 110, der Bestandteil eines passiven Bussystems ist, ist in Figur 11 gezeigt. Dieser Rechner 110 enthält eine optische Eingabe-/Ausgabe-Einrichtung 116, die über je eine Ausgabeleitung 117 und eine Eingabeleitung 118 mit ihrer optischen Übertragungsseite an das optische Bussystem angeschlossen ist und andererseits mit ihrer elektrischen Übertragungsseite an einen internen Rechnerbus 115 angeschlossen ist, an den des weiteren eine zentrale Verarbeitungseinheit CPU, ein Speicher 112 und eine Peripherie-Eingabe-/Ausgabe-Einrichtung 113 mit an diese angeschlossenen peripheren Geräten 114 angeschlossen sind.

Figur 12 zeigt schliesslich das Blockschaltbild einer Eingabe-/Ausgabe-Baugruppe zur Anschaltung an das mit optischen Übertragungsmitteln aufgebaute passive Bussystem mit einer Eingabeleitung 118, einem Fototransistor 1161, einer Anpassungsschaltung 1162, einem Eingabeverstärker 1163, einen Serien-Parallel-Umsetzer 1164, einer Taktversorgung 1165, einem Parallel-Datenbus 1166, eine Adressdecodierungs-/Überwachungslogik 1167, einer Interruptsteuerung 1168, einer Direktspeicherzugriffssteuerung DMA 1169, einer Busdurchschaltung 11610, einer Taktleitung 11611, einem Parallel-/Serienumsetzer 11612, einem Ausgabeverstärker 11613, einer lichtemittierenden Diode 11614, einem Vorwiderstand 11615 und einer Ausgabeleitung 117. Über die Eingabeleitung 118 eintreffende Lichtimpulse werden dem Fototransistor 1161 zugeführt, an dessen Ausgang die Anpassungsschaltung 1162 angeschlossen ist. In ihr werden die vom Fototransistor 1161 gelieferten Steuerimpulse so aufbereitet, dass sie über den Verstärker 1163 dem Serien-/Parallelumsetzer 1164 zugeführt werden können. Ein zur Umsetzung der eintreffenden Information erforderlicher Steuertakt wird aus der ankommenden optischen Information, nämlich den zeitlich aufeinanderfolgenden Lichtimpulsen der jeweils betreffenden optischen Information abgeleitet. Mittels dieses Steuertaktes werden elektrische Zeichenimpulse repräsentierende Informationsbits in der optischen Eingabe-/Ausgabe-Einrichtung zwischengespeichert. Gemäss Fig. 11 ist ein an sich bekannter Taktpuffer in der optischen Eingabe-/Ausgabeeinrichtung 116 vorgesehen, mittels dessen eine Zwischenspeicherung der Informationsbits und deren Zeit paralleler Abruf mit dem für die betreffende Verarbeitungseinrichtung CPU 111 vorgesehenen Arbeitstakt durchführbar ist. Die Gewinnung dieser genannten Steuertaktimpulse erfolgt in der Taktversorgung 1165, deren Eingang unmittelbar mit dem Ausgang des Eingabeverstärkers 1163 verbunden ist und deren Signalausgang mit dem Serien-Parallel-Umsetzer 1164 verbunden ist. Die bereitstehenden elektrischen Signale, die aus der optischen Information gewonnen wurden, werden nachdem ein Interrupt eingeleitet ist, über den Parallel-Datenbus 1166 und über die Busdurchschaltung 11610 an den internen Rechnerbus 115 und in der Folge an die zentrale Verarbeitungseinheit CPU 111 oder den Speicher 112 abgegeben.

Bei Übertragung von Daten aus dem betreffenden Rechner auf den optischen Bus wird über den internen Rechnerbus 115 ein Steuertakt über die Taktleitung 11611 an den Parallel-Serien-Umsetzer 11612 geliefert. Die zu übertragenden Daten werden von der Busdurchschaltung 11610 vom internen Rechnerbus 115 übernommen und dem Parallel-Serien-Umsetzer 11612 zugeführt. In ihm wird in bekannter Weise eine Umsetzung der zeitparallelen Daten in zeitserielle Datenimpulse vorgenommen, die über den Ausgabeverstärker 11613 an den als lichtemittierende Diode 11614, mit der der Vorwiderstand 11615 in Reihe geschaltet ist, realisierten Wandler gegeben, dessen optische Ausgangssignale über die Ausgabeleitung 117 weitergeleitet werden. In jeder zu übertragenden Information ist eine Adressinformation vorgesehen, die aus zwei Teiladressinformationen, nämlich eine den Informationsursprung repräsentierende Ursprungsadresse und eine das Informationsziel repräsentierende Zieladresse, besteht.

Die empfangene Adressinformation wird auf ihre Eindeutigkeit hin in der Adressdecodierungs-/Überwachungslogik 1167 geprüft, so dass eine gleichzeitige Ansteuerung eines Ziels durch zwei oder mehrere Ursprungseinrichtungen erkennbar ist. Dies ist möglich, weil die Information, insbesondere die Adressinformation erfindungsgemäss in einem Code mit Fehlererkennbarkeit übertragen wird, so dass eine durch ein zeitliches Zusammentreffen zweier oder mehrerer Übertragungsvorgänge entstehende Informationsverfälschung erkennbar ist. Vorzugsweise wird als Code mit Fehlererkennbarkeit ein $\binom{m}{n}$-Code verwendet. Es ist vorgesehen, dass als Code mit Fehlererkennbarkeit ein Code mit einer konstanten vorgegebenen Hamming-Distanz zwischen den Binärwerten verwendet wird.

Alle übertragenen Informationen werden von allen Eingabe-/Ausgabe-Einrichtungen 116 empfangen. Eine jeweils empfangene Adressinformation wird hinsichtlich ihres Formats und ihres Inhalts in jeder Eingabe-/Ausgabe-Einrichtung 116 geprüft. Diejenige Eingabe-/Ausgabe-Einrichtung 116, die die ihr zugeordnete Zieladressinformation fehlerfrei erkennt, schaltet die ihr zugehörige Einrichtung durch. Alle weiteren nicht adressierten Eingabe-/Ausgabe-Einrichtungen 116 in dem Mehrrechnersystem löschen die empfangene und zwischenzeitlich gespeicherte Information. Es ist vorgesehen, dass der Empfangsteil R eines Sender-Empfängers, z.B. 8, eine von dem Sendeteil T desselben Sender-Empfängers gesendete Information empfängt, dass die empfangene Information mit der noch im Sendeteil T verfügbaren Information mittels an sich bekannter Vergleicher auf ihre Unverfälschtheit hin geprüft wird, dass bei Vorliegen einer verfälschten empfangenen Information, insbesondere einer Adressinformation, der Sendevorgang unterbrochen wird und dass der Sendevorgang mit gewollt starker zeitlicher Streuung der Sendepausen sooft wiederholt wird, bis der Empfangsteil R eine unverfälschte Information empfangen hat.

In dem Rechner 110 wird eine Interruptprozedur zur Eingabe einer empfangenen Information über den internen Rechnerbus 115 an die zentrale Verarbeitungseinheit CPU 111 erst dann eingeleitet, wenn ein betreffender Adressierungsvorgang eindeutig beendet ist, so dass in aller Regel eine vollkommene Entkopplung der Eingabeleitung 118 von der zentralen Verarbeitungseinheit CPU 111 gegeben ist. Bestimmte Funktionen der zentralen Verarbeitungseinheit CPU 111 haben gegenüber einer Eingabe einer externen Information Priorität.

Es ist auch vorgesehen, dass eine Informationsübertragung oder ein Datentransfer direkt zwischen Speichern 112 zweiter oder mehrerer Rechner 110 durchgeführt wird, so dass die jeweils betreffenden zentralen Verarbeitungseinheiten CPU 111 von dem jeweils betreffenden internen Rechnerbus 115 abgeschaltet sind, wodurch sie vorrangige Verarbeitungsvorgänge abwickeln oder in Ruhestellung verbleiben können.

In dem Empfangsteil R kann gemäss einer Weiterbildung der Erfindung der optoelektrische Wandler anstelle eines Fototransistors auch mit einer Fotodiode realisiert werden.

Es ist bei jeder der betreffenden Funktionseinheiten 11, 21...25, 41, 42, vgl. Figur 1, eine individuell zugeordnete optische Eingabe-/Ausgabe-Einrichtung 116, vgl. Figur 11, vorgesehen, die jeweils einerseits über eine Ausgabeleitung 117 und eine Eingangsleitung 118 mit allen weiteren Eingabe-/Ausgabe-Einrichtungen 116 optisch gekoppelt ist und jeweils andererseits mit weiteren Einrichtungen der betreffenden Funktionseinheit 11, 21...25, 41, 42, beispielsweise über den internen Rechnerbus 115, verbunden ist.

Als Lichtwellenleitungen können solche verwendet werden, die jeweils aus einem einzigen Lichtwellenleiter bestehen, über den alle Datenübertragungsvorgänge mittels zeitlich aufeinanderfolgender, also seriell zu übertragender Lichtimpulse durchgeführt werden. Solche Lichtwellenleiter sind in aller Regel einfaserig aufgebaut. Sie können jedoch bei Bedarf auch mehrfaserig aufgebaut sein.

Eine vorteilhafte Weiterbildung der Erfindung ist dadurch gekennzeichnet, dass zwei optische Busleitungen vorgesehen sind und dass über die erste der zwei optischen Busleitungen Nutzinformation und über die zweite der zwei optischen Busleitungen Diagnoseinformation zum Zwecke der Fehlererkennung und/oder der Fehlerlokalisierung übertragen werden. Über die eine der zwei optischen Busleitungen kann vorteilhafterweise eine einen Prüfauftrag repräsentierende und über die zweite der zwei optischen Busleitungen eine eine Prüfausführung repräsentierende Information übertragen werden, so dass die Funktionstüchtigkeit der zwei optischen Busleitungen überwachbar ist. Aus weiteren Sicherheitsgründen können erfindungsgemäss die Funktionen der beiden optischen Busleitungen durch Umschaltung austauschbar gemacht werden.

Ein Ausführungsbeispiel für das passive Bussystem sieht vor, dass als optischer Mischer ein an sich bekannter bidirektionaler Mischer 62, vgl. Figur 4, vorgesehen ist, dass jeweils der Sendeteil T bzw. der Empfangsteil R alle Sender-Empfänger 8, 811, 8 mn über je eine optische Sendeleitung 71 bzw. eine optische Empfangsleitung 72 an einen ersten bzw. zweiten Anschlusspunkt eines an sich bekannten optischen Abzweigs 9 angeschlossen sind und dass ein jeweils dritter, mit dem Verzweigungspunkt des Abzweiges 9 verbundener Anschlusspunkt über eine Sende-Empfangs-Leitung 90 mit einem Anschlusspunkt des bidirektionalen Mischers 62 verbunden ist.

Ein anderes Beispiel sieht vor, dass als optischer Mischer ein an sich bekannter direktionaler Mischer 62 vorgesehen ist, dass in den betreffenden Funktionseinheiten 11, 15, 16, 21...25, 41, 42 jeweils diesen individuell zugeordnete optische Einelement-Sender-Empfänger 80, vgl. Figur 5, vorgesehen sind und dass jeder der betreffenden Einelement-Sender-Empfänger 80 über eine ihm individuell zugeordnete Sende-Empfangs-Leitung 90 mit einem Anschlusspunkt des bidirektionalen Mischers 62 verbunden ist.

Ein Ausführungsbeispiel für die Erfindung sieht vor, dass als optischer Mischer ein an sich bekannter bidirektionaler Mischer vorgesehen ist, der als Zentralmischer 620, vgl. Figur 9, in einer zentralen Ebene des passiven Bussystems fungiert, dass an eine Anzahl von Anschlusspunkten einer ersten Gruppe des Zentralmischers 620 eine Anzahl, beispielsweise 8, Sende-Empfangs-Leitungen 901...908 angeschlossen sind, die jeweils mit dem Verzweigungspunkt eines Abzweigs 91...98 verbunden sind, dass eine Anzahl, beispielsweise 8, von Dialogrechnern 161...168 vorgesehen ist, deren Sender-Empfänger mit ihrem Sendeteil T bzw. ihrem Empfangsteil R mit einem ersten bzw. einem zweiten Anschlusspunkt des jeweils betreffenden Abzweigs 91...98 verbunden ist, dass an einer Anzahl von Anschlusspunkten einer zweiten Gruppe des Zentralmischers 620 von bzw. zu als unidirektionale Mischer ausgeführten Nebenmischer 611, 612 führende Sendeleitungen bzw. Empfangsleitungen geführt sind, die ihrerseits jeweils an eine erste Anschlussseite bzw. eine zweite Anschlussseite der Nebenmischer 611, 612 angeschlossen sind und dass jeweils eine Anzahl von Funktionsrechnern 151, 152 mit ihren Sendeteilen T und ihren Empfangsteilen R über an die jeweils erste bzw. die jeweils zweite Anschlussseite des betreffenden Nebenmischers 611, 612 verbunden ist.

An den Zentralmischer 620 können als unidirektionale Mischer ausgeführte Nebenmischer über bidirektionale Sende-Empfangs-Leitungen angeschlossen sein. An diese Nebenmischer sind ausserdem Abzweige angeschlossen, durch die sie unidirektionale Sende- bzw. Empfangsleitungen Funktionseinheiten mit ihren jeweiligen Sende- bzw. Empfangsteilen T bzw. R mit dem Zentralmischer 620 verbunden sind, so dass sich eine Baumstruktur als Bussystem ergibt. Eine hybride Struktur für das Bussystem ergibt sich dann, wenn an den Zentralmischer 620 und/oder an zumindest einen Nebenmischer zusätzliche Funktionseinheiten ihren Sende- und Empfangsteilen T, R unmittelbar oder über unidirektionale Sende- bzw. Empfangsleitungen angeschlossen sind.

Eine Weiterbildung der Erfindung sieht vor, dass der Anschluss der Nebenmischer 611, 612 jeweils über zumindest zwei Sendeleitungen bzw. Empfangsleitungen vorgesehen ist, wobei sowohl bei dem Zentralmischer 620 als auch bei den Nebenmischern 611, 612 entsprechend viele Anschlusspunkte bereitgestellt sind, so dass eine Optimierung der Verteilung der Lichtleistung in dem Bussystem erreichbar ist. In einem anderen Beispiel ist vorgesehen, dass als optischer Mischer ein an sich bekannter bidirektionaler Mischer vorgesehen ist, der als Zentralmischer 620, vgl. Figur 10, in einer zentralen Ebene des passiven Bussystems fungiert, dass an eine Anzahl von Anschlusspunkten einer ersten Gruppe des Zentralmischers 620 eine Anzahl, beispielsweise 8 von Sende-Empfangs-Leitungen 901...908 angeschlossen sind, die jeweils mit dem Verzweigungspunkt eines Abzweigs 91...98 verbunden sind, dass eine Anzahl beispielsweise 8, von Dialogrechnern 161...168 vorgesehen ist, deren Sender-Empfänger mit ihrem Sendeteil T bzw. ihrem Empfangsteil R mit einem ersten bzw. zweiten Anschlusspunkt des jeweils betreffenden Abzweigs 91...98 verbunden ist und dass an eine Anzahl von Anschlusspunkten einer zweiten Gruppe des Zentralmischers 620 von bzw. zu dem jeweiligen Sendeteil T bzw. dem jeweiligen Empfangsteil R mindestens eines Funktionsrechners 15 geführt sind.

Ein weiteres Beispiel für das passive Bussystem sieht vor, dass als optischer Mischer ein an sich bekannter unidirektionaler Mischer 61, vgl. Figur 7, vorgesehen ist, dass zumindest ein Funktionsrechner 15 vorgesehen ist, dessen Sender-Empfänger mit seinem Sendeteil T über eine Funktionsrechner-Sendeleitung 711 mit einem Anschlusspunkt einer ersten Anschlussseite des unidirektionalen Mischers 61 und mit seinem Empfangsteil R über eine Funktionsrechner-Empfangsleitung 721 mit einem Anschlusspunkt einer zweiten Anschlussseite des unidirektionalen Mischers 61 verbunden sind, und dass zumindest ein Dialogrechner 16 vorgesehen ist, dessen Sender-Empfänger mit seinem Sendeteil T über eine Dialogrechner-Sendeleitung 712 mit einem weiteren Anschlusspunkt der ersten Anschlussseite des unidirektionalen Mischers 61 und mit seinem Empfangsteil R über eine Dialogrechner-Empfangsleitung 722 mit einem weiteren Anschlusspunkt der zweiten Anschlussseite des unidirektionalen Mischers verbunden sind.

Das erfindungsgemässe passive Bussystem ist nicht nur in Mehrrechnersystemen, sondern auch in Systemen für andere Aufgaben, z.B. Vermittlungssystemen, Überwachungssystemen für industrielle Prozesse, Bordnetzen, insbesondere für Luftfahrzeuge und ähnliches anwendbar.

**Patentansprüche**

1. Passives Bus-System für dezentral strukturierte Mehr-Rechneranordnungen, insbesondere Multimikrocomputer-Anordnungen, bei dem ein bidirektionaler optischer Mischer (620) vorgesehen ist und an Ein-/Ausgänge des bidirektionalen Mischers (620) einzeln angeordnete Funktionseinheiten (161...168) über bidirektional betriebene, diesen Funktionseinheiten (161...168) individuell zugeordnete Lichtwellenleitungen (901...908) angeschlossen sind, dadurch gekennzeichnet, dass mehrere jeweils aus mehreren Funktionsrechnern und einem optischen unidirektionalen Mischer bestehende Systeme (151..., 611, 152..., 612) derart an den bidirektionalen Mischer (620), der als ein Zentralmischer zum Verbinden der mehreren Systeme (151..., 611, 152..., 612) fungiert, angeschlossen sind, dass jeweils ein Eingang und ein Ausgang aus der Vielzahl von Eingängen und Ausgängen der unidirektionalen Mischer (611, 612) mit einem individuell zugeordneten Ein-/Ausgang des bidirektionalen Mischers (620) verbunden ist, wobei die weiteren Eingänge und Ausgänge der unidirektionalen Mischer (611, 612) jeweils mit einem Sendeteil bzw. einem Empfangsteil von Sender-Empfängern (T/R), die jeweils individuell einem Funktionsrechner (151, 152) des betreffenden Systems (151..., 611, 152..., 612) zugeordnet sind, verbunden sind.

2. Passives Bussystem nach Anspruch 1, dadurch gekennzeichnet, dass der Anschluss der Nebenmischer (611, 612) jeweils über zumindest zwei Sendeleitungen bzw. Empfangsleitungen vorgesehen ist, wobei sowohl bei dem bidirektionalen Mischer (620) als auch bei den unidirektionalen Mischern (611, 612) entsprechend viele Anschlusspunkte bereitgestellt sind, so dass eine Optimierung der Verteilung der Lichtleistung in dem Bussystem erreichbar ist.

3. Passives Bussystem nach einem der vorhergehenden Ansprüche, dadurch gekennzeichnet, dass alle Lichtwellenleitungen jeweils aus einem einzigen Lichtwellenleiter bestehen und dass alle Datenübertragungsvorgänge mittels zeitlich aufeinanderfolgender, also seriell zu übertragender Lichtimpulse durchgeführt werden.

4. Passives Bussystem nach Anspruch 3, dadurch gekennzeichnet, dass die Lichtwellenleiter einfaserig aufgebaut sind.

5. Passives Bussystem nach Anspruch 3, dadurch gekennzeichnet, dass die Lichtwellenleiter mehrfaserig aufgebaut sind.

6. Passives Bussystem nach Anspruch 1, dadurch gekennzeichnet, dass zwei optische Busleitungen vorgesehen sind und dass über die erste der zwei optischen Busleitungen Nutzinformation und über die zweite der zwei optischen Busleitungen Diagnoseinformation zum Zwecke der Fehlererkennung und/oder der Fehlerlokalisierung übertragen wird.

7. Passives Bussystem nach Anspruch 1, dadurch gekennzeichnet, dass zwei optische Busleitungen vorgesehen sind und dass über die erste der zwei optischen Busleitungen eine einen Prüfauftrag repräsentierende und über die zweite der zwei optischen Busleitungen eine eine Prüfausführung repräsentierende Information übertragen werden, so dass die Funktionstüchtigkeit der zwei optischen Busleitungen überwachbar ist.

8. Passives Bussystem nach Anspruch 6 oder 7, dadurch gekennzeichnet, dass die Funktionen durch Umschaltung der zwei optischen Busleitungen austauschbar sind.

**Claims**

1. A passive bus system for decentrally-structured multicomputer arrangements, in particular multi-microcomputer arrangements, in which a bi-directional, optical mixer (620) is provided and inputs/outputs of the bi-directional mixer (620) are connected to individual function units (161...168) via bi-directionally operated lightwave lines (901...908) individually assigned to these function units (161...168), characterised in that a plurality of systems (151..., 611, 152..., 612), which each consist of a plurality of function computers and an optical, unidirectional mixer, are connected to the bi-directional mixer (620) which functions as a central mixer to connect the plurality of systems (151..., 611, 152..., 612), such that one input and one output amongst the plurality of inputs and outputs of the unidirectional mixers (611, 612) are in each case connected to an individually assigned input/output of the bi-directional mixer (620), where the other inputs and outputs of the unidirectional mixers (611, 612) are each connected to a transmitting component and receiving component respectively of transmitter-receivers (T/R), each of which is individually assigned to a function computer (151, 152) of the respective system (151..., 611, 152..., 612).

2. A passive bus system as claimed in Claim 1, characterised in that the subsidiary mixers (611, 612) are each connected via at least two transmitting lines and receiving lines, where a corresponding number of connection points are made available both in the bi-directional mixer (620) and the unidirectional mixers (611, 612) to optimise the distribution of the light power in the bus system.

3. A passive bus system as claimed in one of the preceding Claims, characterised in that all the lightwave lines each consist of one single lightwave-guide, and that all the data transmission processes are carried out by means of consecutive light pulses, which are thus to be transmitted in serial form.

4. A passive bus system as claimed in Claim 3, characterised in that the lightwave-guides are single-stranded.

5. A passive bus system as claimed in Claim 3, characterised in that the lightwave-guides are multi-stranded.

6. A passive bus system as claimed in Claim 1, characterised in that two optical bus lines are provided, and that useful information is transmitted via the first of the two optical bus lines and diagnostic information is transmitted via the second of the two optical bus lines for fault recognition and/or fault localisation.

7. A passive bus system as claimed in Claim 1, characterised in that two optical bus lines are provided and that an item of information representing a test order is transmitted via the first of the two optical bus lines and an item of information representing a test execution is transmitted via the second of the two optical bus lines, so that the functioning efficiency of the two optical bus lines can be monitored.

8. A passive bus system as claimed in Claim 6 or 7, characterised in that the functions can be interchanged by switching-over the two optical bus lines.

**Revendications**

1. Système d'infoduc passif pour dispositifs à plusieurs calculateurs et à structure décentralisée, en particulier pour dispositifs à multiples microordinateurs, dans lequel est prévu un mélangeur optique (620) bidirectionnel et dans lequel des entrées/sorties du mélangeur bidirectionnel (620) sont raccordées à des unités fonctionnelles (161...168) disposées séparément, à travers des lignes guides d'ondes optiques (901...908) utilisées dans les deux directions et coordonnées individuellement à ces unités fonctionnelles (161...168), caractérisé en ce que plusieurs systèmes (151..., 611, 152..., 612), constitués chacun de plusieurs calculateurs de fonctions et d'un mélangeur optique unidirectionnel, sont raccordés de telle manière au mélangeur bidirectionnel (620), agissant comme mélangeur central pour interconnecter les différents systèmes (151..., 611, 152..., 612), qu'une entrée et une sortie parmi le grand nombre d'entrées et de sorties des mélangeurs unidirectionnels (611, 612) sont reliées à une entrée/sortie coordonnée individuellement du mélangeur bidirectionnel (620), les autres entrées et sorties des mélangeurs unidirectionnels (611, 612) étant reliées chaque fois à une partie émettrice respectivement une partie réceptrice (T/R) d'émetteurs/récepteurs qui sont chacun coordonnés individuellement à un calculateur de fonctions (151, 152) du système (151..., 611, 152..., 612) concerné.

2. Système selon la revendication 1, caractérisé en ce que le raccordement des mélangeurs annexes (611, 612) est réalisé chaque fois à travers au moins deux lignes d'émission respectivement de réception, avec prévision d'un nombre correspondant de points de raccordement à la fois sur le mélangeur bidirectionnel (620) et sur les mélangeurs unidirectionnels (611, 612), de manière que la répartition de la puissance lumineuse dans le système d'infoduc puisse être optimisée.

3. Système selon une des revendications précédentes, caractérisé en ce que toutes les lignes guides d'ondes optiques sont formées chacune d'un seul guide d'ondes optique et que toutes les opérations de transmission de données sont effectuées au moyen d'impulsions lumineuses qui se suivent dans le temps et qui sont donc à transmettre en série.

4. Système selon la revendication 3, caractérisé en ce que les guides d'ondes optiques sont de type monofibre.

5. Système selon la revendication 3, caractérisé en ce que les guides d'ondes optiques sont de type multifibre.

6. Système selon la revendication 1, caractérisé en ce que deux lignes optiques d'infoduc sont prévues, qu'une information utile est transmise par la première de ces deux lignes et qu'une information de diagnose pour la détection et/ou la localisation d'erreurs est transmise par la seconde des deux lignes optiques.

7. Système selon la revendication 1, caractérisé en ce que deux lignes optiques d'infoduc sont prévues et qu'une information représentant un ordre de contrôle est transmise par la première des deux lignes, tandis qu'une information représentant une exécution d'un contrôle est transmise par la deuxième ligne, de manière que le bon fonctionnement des deux lignes optiques d'infoduc puisse être surveillé.

8. Système selon la revendication 6 ou 7, caractérisé en ce que les fonctions sont interchangeables par commutation des deux lignes optiques d'infoduc.

FIG 1

FIG 2

## FIG 3

621  62  71  72  8

## FIG 4

621  62  90  9  71  72  8

## FIG 5

621  62  90  T+R  80

## FIG 6

opt  71  81  82  el  △  T

72  opt  el  △  R

## FIG 7

## FIG 8

# FIG 9

# FIG 10

# FIG 11

# FIG 12